Europäisches Patentamt

European Patent Office

Office européen des brevets

(11) Veröffentlichungsnummer: **0 319 680**
**A1**

## (12) EUROPÄISCHE PATENTANMELDUNG

(21) Anmeldenummer: **88117303.3**

(22) Anmeldetag: **18.10.88**

(51) Int. Cl.4: **C03C 13/06**

(30) Priorität: **07.12.87 DE 3741331**

(43) Veröffentlichungstag der Anmeldung:
**14.06.89 Patentblatt 89/24**

(84) Benannte Vertragsstaaten:
**AT BE CH DE ES FR GB GR IT LI LU NL SE**

(71) Anmelder: **Hoesch Maschinenfabrik**
**Deutschland Aktiengesellschaft**
**Borsigstrasse 22**
**D-4600 Dortmund 1(DE)**

(72) Erfinder: **Stückrad, Joachim, Dipl.-Ing.**
**Plassstrasse 22c**
**D-4600 Dortmund 13(DE)**

(54) **Verfahren zum Herstellen von Mineralwolle.**

(57) Es wird ein Verfahren zum Herstellen von Mineralwolle vorgeschlagen, bei dem eine im wesentlichen aus mineralfaserverstärktem Kunststoffabfall erschmolzene Mineralschmelze zu Fasern versponnen wird. Gegenüber dem Verfahren nach dem Stand der Technik erlaubt das vorgeschlagene Verfahren das Herstellen von Mineralwolle mit niedrigeren Energiekosten.

EP 0 319 680 A1

## Verfahren zum Herstellen von Mineralwolle

Die Erfindung bezieht sich auf ein Verfahren zum Herstellen von Mineralwolle, bei dem eine aus Zuschlägen erschmolzene Mineralschmelze zu Fasern versponnen wird.

Ein derartiges Verfahren gehört seit langem zum Stand der Technik. Beim Schmelzen von Mineralien müssen hier verhältnismäßig hohe Energiekosten in Kauf genommen werden, da ausschließlich aus elektrischem Strom und/oder Brennstoffen gewonnene Wärmeenergie benutzt wird.

Der Erfindung liegt die Aufgabe zugrunde, ein Verfahren zum Herstellen von Mineralwolle anzugeben, das ein Schmelzen der Mineralien mit niedrigeren Energiekosten ermöglicht.

Erfindungsgemäß wird diese Aufgabe dadurch gelöst, daß mineralfaserverstärkter Kunststoffabfall als wesentlicher Zuschlagstoff eingesetzt wird.

Durch diese Maßnahme wird kostengünstige Wärmeenergie genutzt, die während der Verbrennung des Kunststoffes anfällt.

Nach einem weiteren Merkmal der Erfindung wird mineralfaserverstärkter Kunststoffabfall mit anderen Zuschlagstoffen verpreßt eingesetzt.

Diese Maßnahme begünstigt das gleichmäßige Schmelzen der Mineralien.

## Ansprüche

1. Verfahren zum Herstellen von Mineralwolle, bei dem eine aus Zuschlägen erschmolzene Mineralschmelze zu Fasern versponnen wird, dadurch gekennzeichnet, daß mineralfaserverstärkter Kunststoffabfall als wesentlicher Zuschlagstoff eingesetzt wird.

2. Verfahren nach Anspruch 1, dadurch gekennzeichnet, daß mineralfaserverstärkter Kunststoffabfall mit anderen Zuschlagstoffen verpreßt eingesetzt wird.

**Europäisches Patentamt**

# EUROPÄISCHER RECHERCHENBERICHT

Nummer der Anmeldung

EP 88 11 7303

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 617 045 (B. BRONSHTEIN) <br> * Spalte 3, Zeilen 12-18; Zusammenfassung * <br> --- | 1 | C 03 C 13/06 |
| X | GB-A-1 489 797 (FIBRECLASS LTD) <br> * Ansprüche 1,4,9,10; Seite 1, Zeilen 40-64 * <br> --- | 1 | |
| X | PATENT ABSTRACTS OF JAPAN <br> Band 10, Nr. 208 (C-361)(2264), 22. Juli 1986; & JP - A - 61 048 438 (ASAHI FIBER GLASS CO. LTD.) 10.03.1986 <br> --- | 1 | |
| A | FR-A-2 356 605 (ROCKWOOL INT. A/S) <br> * Ansprüche 1,6 * <br> --- | 1,2 | |
| A | FR-A-2 424 237 (PPG IND.,INC.) <br> * Anspruch 1; Seite 7, Zeilen 12-17 * <br> --- | 1 | |
| A | GB-A-2 059 945 (GMUNDNER ZEMENTWERKE HH AG) <br> * Zusammenfassung; Seite 3, Zeilen 54-58 * <br> --- | | **RECHERCHIERTE SACHGEBIETE (Int. Cl.4)** <br> C 03 C 1/00 <br> C 03 C 13/06 |
| P,X | US-A-4 720 295 (B. BRONSHTEIN) <br> * Zusammenfassung; Spalte 3, Zeilen 22-29 * <br> ----- | 1,2 | |

Der vorliegende Recherchenbericht wurde für alle Patentansprüche erstellt

| Recherchenort | Abschlußdatum der Recherche | Prüfer |
|---|---|---|
| BERLIN | 21-02-1989 | STROUD J.G. |